# EUROPÄISCHE PATENTSCHRIFT

(11) **EP 3 500 840 B1**
(45) Veröffentlichungstag und Bekanntmachung des Hinweises auf die Patenterteilung: **17.05.2023**
(21) Anmeldenummer: 17751427.0
(22) Anmeldetag: 17.08.2017
(51) Int. Cl.: G01N 21/15, G01N 21/25, G01N 21/76

(54) **MESSVORRICHTUNG MIT INJEKTOR UND SPRITZSCHUTZ**
MEASURING DEVICE WITH INJECTOR AND SPLASH PROTECTION
DISPOSITIF DE MESURE COMPRENANT UN INJECTEUR ET UNE PROTECTION CONTRE DES GICLÉES

(30) Priorität: 19.08.2016 CH 10722016
(43) Veröffentlichungstag der Anmeldung: 26.06.2019
(73) Patentinhaber: Tecan Trading AG, 8708 Männedorf (CH)
(72) Erfinder: LANSING, Manfred, 5020 Salzburg (AT); POSCH, Johannes, 5400 Hallein (AT); SAWETZKI, Tobias, 83471 Berchtesgaden (DE)
(74) Vertreter: Troesch Scheidegger Werner AG
(86) Internationale Anmeldenummer: PCT/EP2017/070859
(87) Internationale Veröffentlichungsnummer: WO 2018/033600

(56) Entgegenhaltungen:
- EP-A2- 0 523 521
- EP-A2- 1 441 216
- WO-A1-01/96837
- WO-A1-97/11354
- US-A- 5 611 994
- US-A1- 2007 183 931

## Beschreibung

Die vorliegende Erfindung betrifft eine Messvorrichtung mit einem Injektor, einer Optik zum Messen von Signalen, die von einer Probe ausgestrahlt werden, und einem Spritzschutz für die Lumineszenz-Optik.

Lumineszenz-Messvorrichtungen sind, wenn sie als eigenständige Geräte verbaut sind, als sogenannte Luminometer aus dem Stand der Technik bekannt. Unter Lumineszenz wird dabei von Proben ausgehendes, also emittiertes Licht einer Probe verstanden, welches nach einer Anregung, zum Beispiel durch eine chemische oder biochemische Reaktion, von einer Probe freigesetzt wird. Entsprechende Proben können dazu in Küvetten bereitgestellt werden, die in der Regel ein Fassungsvermögen von ca. 1,5 ml bis 2 ml aufweisen. In die Küvetten kann dann von oben eine Starterlösung dazugegeben werden, und mittels einer seitlich angeordneten Optik wird entlang einer horizontalen Ausleserichtung die Probe auf Lumineszenz hin vermessen.

Soll eine Vielzahl von Proben analysiert werden, werden die Proben typischerweise in standardisierten Mikroplatten bereitgestellt. Eine der in der Labortechnik gängigsten Mikroplatte ist die 96-Well Mikroplatte, die in einem standardisierten Array 12 x 8 sogenannten Wells (den Reaktionstöpfchen) umfasst. Die Standardisierung betrifft dabei unter anderem die Anordnung der einzelnen Wells, deren Abstand zueinander sowie Grösse und Grundriss der Standfläche.

Die jeweiligen Aspekte sind beispielsweise in der Norm ANSI_SBS 1-2-3-4-2004 definiert. Gemäss dieser Norm weist beispielsweise eine Standard-96 Well Mikroplatte einen Achsabstand zwischen einzelnen Wells von 9 mm und eine Standard-384 Well Mikroplatte einen Achsabstand zwischen einzelnen Wells von 4,5 mm auf.

Der Vorteil solcher standardisierten Mikroplatten ist, dass sie besonders für die automatisierte Analyse von Proben mit hohem Durchsatz (high throughput) geeignet sind. Zum Beispiel kann die Lumineszenz in einem sogenannten Mikroplatten-Reader automatisiert für jedes Well gemessen werden. In dem Mikroplatten-Reader kann dann jedes Well gegenüber einer Lumineszenz-Messvorrichtung positioniert und die Probe in diesem Well ausgemessen werden. In dem Stand der Technik bekannt sind dabei auch sogenannte Multi-Mode Mikroplatten-Reader, die zum Beispiel nicht nur Lumineszenz-Intensitäten messen können, sondern zusätzlich auch noch Fluoreszenz-Intensitäten und/oder auch die Absorption von Licht einer Probe. Ein Beispiel für einen solchen Multimode-Mikroplatten Reader ist der sogenannte Infinite^{®} 200 Pro oder der Spark^{®} 20M des vorliegenden Anmelders.

Bezüglich der Lumineszenz einer Probe werden je nach Art der Anregung verschiedene Formen der Lumineszenz unterschieden: Biolumineszenz wird durch biolumineszente Stoffe in lebenden Organismen ausgelöst (wie z.B. dem Luziferin in Leuchtkäfern); Chemilumineszenz dagegen durch eine chemische Reaktion. Photolumineszenz wird durch Licht einer spezifischen Wellenlänge ausgelöst und wird auch als Fluoreszenz bezeichnet.

Ein Vorteil der Chemilumineszenz ist, dass ein Lumineszenz-Signal gezielt ausgelöst werden kann, indem die Zugabe des oder der entsprechenden Reagenzien zeitlich kontrolliert erfolgt. Bei der sogenannten Glow-Lumineszenz ist dabei das ausgelöste Lumineszenz-Signal über mehrere Minuten sichtbar, und teilweise können auch ab Reaktionsbeginn mehrere Minuten vergehen, bis tatsächlich ein stabiles Signal detektierbar ist. Bei der sogenannten Flash-Lumineszenz dagegen wird das Signal-Maximum schlagartig nach Reaktionsbeginn erreicht - dies kann je nach Reaktionstyp bereits innerhalb von ca. 200 bis 300 Mikrosekunden (µsec) sein. Typischerweise klingt das Signal einer Flash-Lumineszenz in sehr kurzer Zeit (beispielsweise innerhalb von 2 bis 3 Sekunden) wieder ab. Im Vergleich mit der Glow-Lumineszenz ist das Signal der Flash-Lumineszenz in der Regel jedoch deutlich stärker, und die Nachweisgrenze ist deutlich niedriger.

Um das Flash-Lumineszenz-Signal möglichst zur Gänze zu erfassen, ist es im weiteren notwendig, die Reagenzienzugabe so durchzuführen, dass eine schnelle und vollständige Durchmischung der Reaktionspartner gewährleistet ist.

Flash-Lumineszenz wird aufgrund der schnellen Kinetik beispielsweise in der klinischen Diagnostik in Küvetten gemessen, da hier relativ einfach die gewünschte Reaktion in der Probe durch Zugabe der Reagenzien ausgelöst und zeitgleich eine Lumineszenz-Messung durchgeführt werden kann. Glow-Lumineszenz ist besonders gut für die Analyse von Proben in Mikroplatten-Readern geeignet. Für eine automatisierte Zugabe umfasst der Mikroplatten-Reader dazu einen Injektor, über den das jeweilige Reagenz zugeführt und in ein bestimmtes Well der Mikroplatte abgegeben wird. In der gängigsten Variante ist dabei der Injektor-Auslass um ein oder mehrere Wells zur Lumineszenz-Optik, mit welcher ein ausgelöstes Lumineszenz-Signal gemessen werden soll, versetzt.

Ein solcher Versatz ist möglich, da sich durch die langsamere Kinetik der Glow-Lumineszenz ein grösseres Zeitfenster zwischen Zugabe der Reagenzien und Lumineszenz-Beginn ergibt als bei der schnellen Flash-Lumineszenz. Der Vorteil eines räumlichen Versatzes von Injektor-Auslass und Optik ist, dass eventuelle Spritzer, die durch die Abgabe von Flüssigkeit in die Probe entstehen, nicht auf die Optik treffen, und so die Optik sauber bleibt. Dies garantiert, dass Reagenzflüssigkeit die Lumineszenz-Messung optisch nicht verfälscht und diese auch nicht angreift, wenn, wie bei der Flash-Lumineszenz häufig, beispielsweise Natronlauge (NaOH) und Wasserstoffperoxid (H₂O₂) verwendet werden. Nachteilig ist dagegen, dass durch das notwendige Verschieben des entsprechenden Wells zur Optik hin bei der Flash-Lumineszenz gegebenfalls wertvolle Zeit für die Messung vergeht, bis die Messung tatsächlich gestartet werden kann.

Im Stand der Technik ist aus dem Dokument US 5,611,994 eine Lumineszenz-Anordnung bekannt, bei welcher ein Injektor so gegenüber einer Mikroplatte und einer Lumineszenz-Optik angeordnet ist, dass die Abgabe von Reagenzien mit der Injektornadel schräg von oben in das gleiche Well erfolgt, welches mittels der oberhalb angeordneten Optik bezüglich der Lumineszenz ausgemessen werden soll. Zum Schutz vor Spritzern ist zwischen Mikroplatte und Optik eine Lochmaske positioniert, und zur optischen Messung wird die Injektornadel eingezogen, so dass der optische Messbereich oberhalb des Wells nicht durch die Anwesenheit der Injektornadel eingeschränkt ist.

Ebenfalls aus dem Stand der Technik bekannt ist aus dem Dokument WO 01/96837 A1 ein universaler Mikroplatten-Analysierer, welcher durch eine Anordnung von Spiegeln, Blenden und Polarisatoren Fluoreszenz-, Absorptions- und Lumineszenz-Messungen durchführen kann.

Auch die Patentschrift US 7,419,836 B2 des aktuellen Anmelders beschreibt die Verwendung einer Lochplatte in einem Mikroplatten-Reader, die zwischen einer oberen Lumineszenz-Optik und der Mikroplatte horizontal verschiebbar angeordnet ist. Der Injektor ist horizontal oberhalb der Lochplatte angeordnet, und der Auslass der Injektornadel endet in dem Well der Mikroplatte, über dem zur Lumineszenz-Messung auch die Optik positioniert ist. Mit der Lochblende wird vor allem der Beobachtungsbereich für die Optik definiert. Für die Situation, wenn sich keine Mikroplatte in dem Mikroplatten-Reader befindet, ist ein weiterer Schutzschirm unterhalb des Schlittens vorgesehen, der sonst die Mikroplatte halten würde. So werden zusätzliche Optik-Teile, die sich noch unterhalb des Schlittens befinden, vor unbeabsichtigtem Abtropfen von Flüssigkeit aus dem Injektor geschützt.

Der Vorteil von der Verwendung von Lochplatten ist, dass ein gewisser Spritzschutz für die über dem Injektorauslass liegende Messoptik gegeben ist, und Flüssigkeiten relativ einfach trotz Spritzschutz in ein Well dosiert werden können. Nachteile von solchen Lochplatten sind, dass sie Abschattungen auf der Probe verursachen können, wenn die Blende als Spritzschutz relativ klein gewählt ist. Solche Abschattungen können die gemessenen Lumineszenz-Signale verfälschen. Ist die Blende grösser gewählt, um solche Abschattungen zu vermeiden, besteht das Risiko, dass trotzdem Spritzer auf die Optik gelangen können.

Es ist eine Aufgabe der vorliegenden Erfindung, eine Lumineszenz-Messvorrichtung bereitzustellen, mit welcher die oben genannten Nachteile behoben sind.

Die Aufgabe der vorliegenden Erfindung wird durch die Merkmale des unabhängigen Anspruchs 1 gelöst.

Insbesondere durch die Verwendung einer Lumineszenz-Messvorrichtung mit einer Lumineszenz-Optik, die über dem Auslassende der Injektornadel angeordnet ist, und mit einem durchgehenden, zwischen der Optik und dem Auslassende angeordneten Spritzschutz wird es ermöglicht, dass zugleich in ein ausgewähltes Well einer Mikroplatte ein Reagens zugegeben und eine Lumineszenz-Messung in demselben Well gestartet werden kann.

Der Vorteil einer solchen, erfindungsgemässen Lumineszenz-Messvorrichtung ist, dass
- beispielsweise eine Flash-Lumineszenz in einer Probe eines bestimmten Wells einer Mikroplatte ausgelöst und zeitgleich mit der Messung gestartet werden kann. Die ausgelöste Reaktion kann trotz schneller Reaktionskinetik ohne Zeit- und/oder Datenverlust von dem Detektorsystem erfasst werden.
- in der dargestellten Ausführungsform das Glasplättchen ohne besonderen technischen Aufwand leicht gereinigt und bei Bedarf ausgetauscht werden kann.
- Zusätzlich ist gewährleistet, dass die empfindliche Lumineszenz-Optik des Detektorsystems nicht durch eventuelle Flüssigkeitsspritzer durch die Injektion verschmutzt wird und so die Reaktionssignale durch Flüssigkeitstropfen auf der Optik verfälscht werden.
- Da häufige Reagenzien zum Auslösen einer Flash-Lumineszenz beispielsweise Natriumhydroxid (Natronlauge/NaOH) und Wasserstoffperoxid sind, wird ausserdem die Gefahr, dass die Optik durch Spritzer solcher stark reaktiven Reagenzien beispielsweise durch Korrosion beschädigt wird, gebannt.

Ausführungsbeispiele der vorliegenden Erfindung werden nachstehend anhand von Figuren näher erläutert. Es zeigen
- Fig. 1: eine schematische Übersichtszeichnung über eine beispielhafte Lumineszenz-Messvorrichtung mit einem horizontal angeordneten Injektor;
- Fig. 2: eine schematische Übersichtszeichnung über eine beispielhafte Lumineszenz-Messvorrichtung mit zwei vertikal angeordneten Injektoren;
- Fig. 3: eine schematische Ausschnitts-Ansicht von unten auf eine Lumineszenz-Messvorrichtung gemäss Figur 2 auf die Schnittebene A;
- Fig. 4: eine schematische Ausschnitts-Zeichnung von unten auf einen Lumineszenz-Messvorrichtung mit bis zu drei horizontal angeordneten Injektoren;
- Fig. 5: eine schematische Übersichtszeichnung über eine beispielhafte Lumineszenz-Messvorrichtung in einem Mikroplatten-Reader mit zwei Injektoren und Einrichtungen für Lumineszenz- und Fluoreszenz-Messungen; und
- Fig. 6: eine schematische Übersichtszeichnung über einen Multimode-Mikroplatten-Reader mit einer erfindungsgemässen Lumineszenz-Messvorrichtung.

Die vorliegende, erfindungsgemässe Messvorrichtung wird am speziellen Beispiel einer Lumineszenz-Messvorrichtung 1 zum Messen von Lumineszenz-Signalen von Proben in Wells 9 einer Mikroplatte 8 beschrieben. Im Allgemeinen geht es jedoch um eine Messvorrichtung, welche generell zur Messung von Licht, welches von Proben ausgestrahlt wird, die in Wells einer Mikroplatte angeordnet sind, ausgebildet ist. Das zu messende bzw. zu detektierende Licht kann verschiedene Wellenlängen aufweisen, verschiedener Natur sein und auf verschiedene Arten ausgelöst sein, wobei bevorzugt die eingesetzte Optik 10,10*'*,10*"* und die jeweiligen Lichtwege, optischen Achsen 20,31,32 und Detektionssysteme an das zu detektierende Licht entsprechend angepasst sind. Alternativ zur Detektion von Lumineszenz-Signalen kann die erfindungsgemässe Messvorrichtung daher zum Messen von Fluoreszenz-Signalen, die von einer Probe kommen, oder zum Messen einer Absorption von Licht durch eine Probe ausgebildet sein. In bevorzugt allen Ausführungsformen umfasst die erfindungsgemässe Messvorrichtung jedoch zumindest einen Injektor 2 zum Auslösen eines zu messenden Lichtsignals und einen Spritzschutz 16, wie er im Folgenden weiter beschrieben wird.

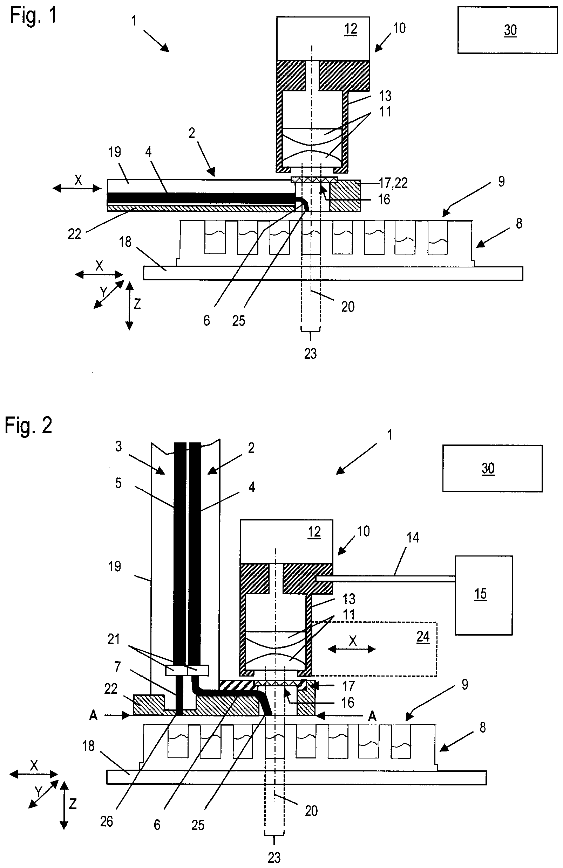

In Fig. 1 ist eine schematische Übersichtszeichnung über eine beispielhafte Lumineszenz-Messvorrichtung 1 in einer einfachen Ausführungsform mit einem Injektor 2 gezeigt. Der Injektor 2 umfasst eine Zuleitung 4, die in der gezeigten Lumineszenz-Messvorrichtung 1 beispielhaft horizontal angeordnet ist. Der Injektor 2 umfasst ausserdem eine Injektornadel 6 mit einem Auslassende 25. Über ein (nicht gezeigtes) Pumpen- und Ventil-System und die Zuleitung 4 kann eine Flüssigkeit, bevorzugt ein Reagens zum Auslösen einer Lumineszenz in einer Probe, in die Injektornadel 6 zugeführt und durch das Auslassende 25 abgegeben werden. Ist das Auslassende 25 über einem Well 9 einer Mikroplatte 8 positioniert, erfolgt die Abgabe des Reagens in dieses Well 9. Bevorzugt ist der Injektor 2 so ausgebildet, dass Flüssigkeitsvolumina im Bereich von 1 µl bis zum maximalen Arbeitsvolumen des Mikroplatten-Wells, z.B. 300 µl in einem Well einer 96 Well Mikroplatte, abgegeben werden können.

Bevorzugt in allen Ausführungsformen umfasst der Injektor 2 eine Zuleitung 4, welche zu der Lumineszenz-Optik 10 und ihrer optischen Achse 20 beabstandet angeordnet ist. Die Injektornadel 6 ist dabei dem ihrem Auslassende 25 gegenüberliegenden Ende mit der Zuleitung 4 verbunden.

Zum Auslösen der Reaktion, die Lumineszenz-Licht freisetzt, wird mit dem Injektor 2 ein Reagens in das Well 9 der zu analysierenden Probe zugegeben, welches die Reaktion startet. Ein solches Reagens kann beispielsweise ein Substrat oder ein Enzym enthalten. Lumineszenz-Assays sind an sich aus dem Stand der Technik bekannt. Beispielhaft genannt ist hier der LIAISON^{®} XL Anti-HBs II Assay der Firma DiaSorin zur Detektion von Antikörpern gegen ein Hepatitis B-Oberflächenantigen.

Die Lumineszenz-Messvorrichtung 1 umfasst weiterhin eine Lumineszenz-Optik 10, die zum Messen eines Lumineszenz-Signals einer Probe ausgebildet ist. Die Lumineszenz-Optik 10 umfasst eine optische Achse 20 und einen die optische Achse 20 umschliessenden Messbereich 23. Zum Messen eines Lumineszenz-Signals einer Probe, die sich in einem Well 9 einer Mikroplatte 8 befindet, ist die Lumineszenz-Optik 10 so gegenüber dieser Mikroplatte 8 ausgerichtet, dass die optische Achse 20 im Wesentlichen senkrecht zu der Mikroplatte 8 bzw. zu dessen Grundfläche verläuft.

Besonders bevorzugt ist dabei die Lumineszenz-Optik 10 über der Mikroplatte 8 positioniert. Auf diese Weise kann das von der Probe kommende Licht im Wesentlichen unverfälscht und direkt auf die Lumineszenz-Optik 10 gelenkt werden, ohne dass das Licht den Boden der Mikroplatte 8 passieren muss. Signalverfälschungen, die durch eventuelle Absorption durch das Material der Mikroplatte entstehen können, können so vermieden werden.

Der die optische Achse 20 umschliessende Messbereich 23 entspricht in dem Fall, in dem Proben in Wells 9 einer Mikroplatte 8 bereitgestellt werden, dem Bereich des Wells 9, der von oben durch die Lumineszenz-Optik 10 zur Messung von Lumineszenz-Signalen zugänglich ist. Im Idealfall entspricht der Messbereich 23 dem Durchmesser eines Wells, da so das gesamte Well 9 durch die darüber liegende Lumineszenz-Optik 10 für die Messung zugänglich ist.

Zum Messen von Lumineszenz-Signalen aus Proben mit der Lumineszenz-Messvorrichtung 1 wird in der Regel das von einer Probe kommende Licht einer ausgewählten Wellenlänge während einer vorbestimmten Zeit (beispielsweise während einer Minute bei Glow-Lumineszenz-Messungen oder während weniger Sekunden bei Flash-Lumineszenz-Messungen) erfasst und gegebenenfalls auf einen Signalwert pro Sekunde umgerechnet. Angegeben wird die Intensität der ausgewählten Lichtstrahlung z.B. in RLU (Relative Light Unit). Mittels einer Optik 10 wird von der Probe kommendes Licht zunächst gesammelt und zum Lumineszenz-Detektor geleitet. Der Lumineszenz-Detektor 12 umfasst ggf. ein Filtersystem, um die Wellenlänge des zu messenden Lichts zu filtern, und ein Photomultipliertube (PMT) zur Umwandlung und Verstärkung des Photonensignals in einen elektrischen Strom.

Unter einer Probe wird jegliche Art von Material verstanden, welches in Bezug auf seine chemische Zusammensetzung oder in Bezug auf bestimmte Eigenschaften analysiert werden soll. Für Lumineszenz-Messungen insbesondere in sogenannten Mikroplatten-Readern werden bevorzugt Proben in einer Flüssigkeit verwendet. Dabei kann es sich um in einer definierten Flüssigkeit (z.B. einer Pufferlösung oder einem anderen Lösungsmittel) gelöste biochemische Moleküle (wie Nukleinsäuren, Zucker, Eiweisse, usw.) oder andere Stoffe handeln. Es kann sich aber auch um direkte flüssige Proben bspw. Blut / Serum / Urin, etc. handeln, die mit einem geeigneten Reagens vermischt bzw. verdünnt sind.

Bevorzugt werden solche Proben in standardisierten Probenbehältern bereitgestellt, besonders bevorzugt in den bereits erwähnten Standard-Mikroplatten mit 96, 384 oder 1536 Wells. Alternativ können Proben auch in anderen, im Labor gebräuchlichen Probengefässen wie Test-Röhrchen (z.B. 0,5 ml oder 1,5 ml Teströhrchen) oder 6-Well Platten / 12-Well Platten 24-Well oder anderen Plattenformaten bereitgestellt werden. Bevorzugt ist die Verwendung von Standard-Mikroplatten, da sie, wie bereits erwähnt, eine einheitlich grosse Grundfläche aufweisen, und so jeweils gleichartig und automatisiert bewegt werden können. So können beispielsweise mit der gleichen Aufnahmevorrichtung Behälter verschiedenster Grössen aufgenommen und gegenüber der Lumineszenz-Optik 10 und dem Injektor 2 positioniert werden.

Bevorzugt erstreckt sich in allen Ausführungsformen der Lumineszenz-Messvorrichtung 1 die Injektornadel 6 des Injektors 2 bis unter die Lumineszenz-Optik 10. Zumindest ein Teil der Injektornadel 6 ist dabei unter der Lumineszenz-Optik 10 zur Lumineszenz-Messung angeordnet. Bevorzugt in allen Ausführungsformen mündet das Auslassende 25 der Injektornadel in den Messbereich 23 der Lumineszenz-Optik 10. So kann im Wesentlichen zeitgleich in demselben Well 9 der Mikroplatte 8 mit dem Injektor 2 ein Reagens in die Probe des Wells abgegeben und mit der Lumineszenz-Optik 10 gemessen werden. Die Messung des Lumineszenz-Lichtes des Lichtes beginnt zeitgleich mit dem Start der Reagenzienzugabe durch die Injektornadel 6. Besonders bevorzugt ist, das Messen des Lumineszenz-Lichtes vor dem Start der Reagenzienzugabe zu beginnen. Dabei hat sich bewährt, die Messung bis zu 1 sec vor der Reagenzienzugabe zu beginnen. Ein umständliches Verschieben der Mikroplatte von einer Injektor-Position in eine Messposition, wie es bei Lumineszenz-Messvorrichtungen mit einem räumlichen Versatz von Injektor und Lumineszenz-Optik notwendig ist, kann so vermieden werden, da sich der Auslass 25 bereits über dem Well 9 der Mikroplatte 8, das in dem Messbereich 23 der Lumineszenz-Optik positioniert ist, befindet. Zudem könnte die für das Verschieben benötigte Zeit dazu führen, dass der Anfang der schnellen Flash-Lumineszenz nicht von der Messung erfasst werde könnte.

Ebenfalls bevorzugt in allen Ausführungsformen umfasst die Lumineszenz-Messvorrichtung 1 erfindungsgemäss einen Spritzschutz 16. Dieser ist zwischen dem Auslassende 25 des Injektors 2 und der Lumineszenz-Optik 10 zur Lumineszenz-Messung angeordnet und erstreckt sich im Wesentlichen senkrecht zu der optischen Achse 20, und deckt zumindest den Messbereich 23 der Lumineszenz-Optik 10 ab. Der Spritzschutz 16 weist also keine Öffnungen auf, durch die beispielsweise eine Injektornadel geführt werden könnte. Er erstreckt sich ohne Unterbruch zumindest über den Messbereich 23.

Insbesondere durch die Kombination der Anordnung der Injektornadel 6 mit ihrem Auslassende 25 unterhalb der Lumineszenz-Optik 10 und dem Bereitstellen eines durchgehenden Spritzschutzes zwischen der Lumineszenz-Optik 10 und dem Auslasssende 25 des Injektors 2 wird es ermöglicht, dass ohne Gefährdung der empfindlichen Lumineszenz-Optik 10 Reagenzien zum Auslösen einer Lumineszenz in eine Probe abgegeben werden können, und trotzdem bereits mit der Zugabe des Reagens die Messung mit der Lumineszenz-Optik 10 gestartet werden kann. Dies ist besonders bei der Verwendung von Flash-Lumineszenz zur Probenanalyse von Vorteil, da hier zum Teil hochreaktive Reagenzien zur Probe als Reaktionsauslöser zugegeben werden müssen und zum anderen die Lumineszenz schlagartig ausgelöst wird und nur über einen relativ kurzen Zeitraum (ab Reaktionsstart bis zu beispielsweise 5 sec) detektierbar ist.

Bevorzugt in allen Ausführungsformen umfasst die Lumineszenz-Messvorrichtung 1 einen Schlitten 18, mit welchem eine Mikroplatte 8 gegenüber dem Auslassende 25 des Injektors 2 und entsprechend auch gegenüber der Lumineszenz-Optik 10 zur Messung von Lumineszenz-Licht positionierbar ist. In den Figuren ist der Schlitten 18 in X-Richtung, Y-Richtung und Z-Richtung eines dreidimensionalen Koordinatensystems bewegbar gezeigt. Eine derartige Bewegbarkeit des Schlittens entlang sämtlichen drei Raumachsen des dreidimensionalen Koordinatensystems ist besonders bevorzugt, da sie ein exaktes Positionieren einer Probe gegenüber dem Injektor 2 und auch gegenüber der Lumineszenz-Optik 10 erlaubt. Bevorzugt ist der Schlitten zumindest entlang der X-Achse verfahrbar ausgebildet. Je nach Bedarf kann der Schlitten 18 dann zusätzlich noch entlang der Y-Achse und/oder entlang der Z-Achse verfahrbar ausgebildet sein. Die Bewegbarkeit kann mittels eines Motors (nicht gezeigt) realisiert werden, der bevorzugt durch eine zentrale Steuereinheit 30 überwacht und gesteuert wird.

Der Schlitten 18 ist besonders bevorzugt so ausgebildet, dass eine Standard-Mikroplatte auf ihm stabil platziert werden kann. Dazu kann der Schlitten 18 beispielsweise als ein Rahmen ausgebildet sein, der Anschläge umfasst, gegen welche eine aufgesetzte Mikroplatte 8 mittels gefederten Andruckmitteln in einer definierten Position gehalten wird. Die Andruckmittel sind bevorzugt so ausgelegt, eine Mikroplatte von Hand oder durch einen Roboterarm automatisiert eingelegt oder herausgenommen werden kann.

Lumineszenz-Optiken 10 und Detektoren 12 zur Messung und Detektion von Lumineszenz-Signalen sind an sich ebenfalls aus dem Stand der Technik bekannt. Eine solche Lumineszenz-Optik 10 umfasst bevorzugt ein Linsensystem 11, mit welchem Lumineszenz-Licht, das von einer Probe emittiert wird, gebündelt und auf den Detektor 12 abgebildet wird. Zum Detektieren des auf den Detektor 12 gelenkten Lumineszenz-Lichts umfasst der Detektor 12 beispielsweise einen Photomultiplier, Photodioden, Photodioden-Arrays und/oder Avalanche-Dioden. Mittels einer Steuereinheit 30 kann dann das detektierte Lumineszenz-Licht in ein Intensitätssignal umgerechnet werden und gegebenenfalls zur Ausgabe an einen Benutzer weiterverarbeitet werden.

Insbesondere die Lumineszenz-Optik 10 kann von einem Gehäuse 13 umgeben sein. Mit einem solchen Gehäuse 13 kann vermieden werden, dass störendes Umgebungslicht auf das Linsensystem 11 fällt und so die Detektion von Lumineszenz-Licht aus einer Probe verfälscht. Zudem wird die Lumineszenz-Optik 10 von anderen Umgebungseinflüssen wie Staub usw. geschützt, und sämtliche Elemente der Lumineszenz-Optik 10 können auf einfache Art und Weise gemeinsam umpositioniert werden. Der Lumineszenz-Detektor 12 kann ebenfalls von dem Gehäuse 13 umgeben sein, oder er ist anderweitig direkt an die Lumineszenz-Optik 10 oder ihr Gehäuse 13 gekoppelt. In einer weiteren alternativen Ausführungsform ist der Lumineszenz-Detektor 12 separat zu der Lumineszenz-Optik 10 angeordnet und mit dieser über ein Lichtleitersystem verbunden (nicht gezeigt).

Analog kann, wie in Fig. 1 gezeigt, auch zumindest die Zuleitung 4 des Injektors 2 von einem Gehäuse 19 umschlossen sein. Dies kann insbesondere dann bevorzugt sein, wenn vorgesehen ist, dass der Spritzschutz 16 mit dem Injektor 2 verbunden ist. Eine solche Verbindung ist bevorzugt, wenn zum Beispiel der Spritzschutz 16 mit dem Injektor 2 entlang einer Achse eines dreidimensionalen Koordinatensystems (beispielsweise entlang der X-Achse) verschiebbar sein soll, um den Spritzschutz 16 aus der eng verbauten Umgebung mit der Lumineszenz-Optik 10 herauszuziehen und ihn beispielsweise zu reinigen oder durch einen anderen Spritzschutz auszutauschen. Eine Verschiebbarkeit eines Injektors entlang einer oder mehr Achsen und/oder sogar eine Verdrehbarkeit des Injektors zumindest um eine der Achsen kann vorgesehen sein, unabhängig davon, ob der Injektor horizontal wie in Figur 1 oder vertikal wie in Figur 2 angeordnet ist.

In Figur 1 ist beispielhaft gezeigt, dass das Gehäuse 19 für die Zuleitung 4 des Injektors 2 Teil einer Halterung 17 für den plättchenförmigen Spritzschutz 16 ist. Die Halterung 17 für den Spritzschutz 16 ist damit teilweise in den Injektor bzw. dessen Gehäuse 19 integriert. Weiter ist in Figur 1 beispielhaft gezeigt, dass zumindest die Zuleitung 4 des Injektors 2 mit ihrem Gehäuse 19 und der Injektornadel 6 entlang der X-Achse eines Koordinatensystems verschiebbar ist. In dieser Ausführungsform ist das Gehäuse 19 des Injektors 2 Teil einer Halterung 17 für den Spritzschutz 16. Der übrige Teil der Halterung 17 für den Spritzschutz 16 wird durch zusätzliche Haltestrukturen gebildet, die in diesem Fall ebenfalls mit dem Injektor 2 bzw. dessen Gehäuse 19 verbunden ist. Wird der Injektor 2 mit seiner Zuleitung 4, der Injektornadel 6 und dem Gehäuse 19 nach links entlang der X-Achse verschoben, werden ebenfalls die zusätzlichen Haltestrukturen der Halterung 17 und der auf der Halterung liegende Spritzschutz 16 nach links verschoben. Das Gehäuse 19 des Injektors vermittelt daher eine strukturelle Verbindung zwischen dem Injektor und dem Spritzschutz, so dass der Injektor 2 mit dem Spritzschutz 16 als eine strukturelle Einheit verschoben werden können.

Es ist besonders bevorzugt, dass der Spritzschutz 1 in allen Ausführungsformen plättchenförmig, also ein durchgehender, flächiger Körper ist. Bevorzugt deckt dieser flächige Körper zumindest den Messbereich 23 der Lumineszenz-Optik 10 zur Lumineszenz-Messung vollständig ab, besonders bevorzugt ist der Spritzschutz 16 so gross, dass er die zur Mikroplatte 8 hinweisende Seite der Lumineszenz-Optik 10 möglichst vollständig gegenüber möglichen Spritzern, die von durch dem unterseits liegendem Auslassende in ein Well 9 abgegebene Flüssigkeit entstehen können, abdeckt und so schützt.

Besonders bevorzugt ist der Spritzschutz 16 austauschbar in der Lumineszenz-Messvorrichtung 1 angeordnet. Bevorzugt umfasst die Lumineszenz-Messvorrichtung 1 dazu für den Spritzschutz 16 eine Halterung 17, die eine obere Auflagefläche aufweist, auf welche der Spritzschutz 16 einfach aufgelegt werden kann. Die Halterung 17 umfasst eine kreisförmige Öffnung, die mindestens Licht des Messbereichs 23 der Lumineszenz-Optik 10 durchlässt. Die Halterung 17 kann im Bereich der Öffnung eine obere Aussparung umfassen, so dass eine Schulter gebildet wird, auf welche der Spritzschutz 16 auflegbar ist. Alternativ oder zusätzlich kann die Halterung einfache Verbindungsmittel wie z.B. Schnappverschlüsse aufweisen, mit welchen der Spritzschutz 16 auf der Auflagefläche gehalten wird.

Wie bereits diskutiert kann die Halterung 17 an dem Injektor 2 bzw. dessen Gehäuse 19 befestigt sein, oder der Injektor 2 bzw. dessen Gehäuse 19 bildet Teil der Spritzschutz-Halterung 17. Auf diese Weise ist das Plättchen unbewegbar gegenüber dem Injektor angeordnet, kann aber mit dem Injektor 2 bewegt werden.

In einer besonders bevorzugten Ausführungsform des Spritzschutzes 16 ist dieser zumindest teilweise optisch transparent, wobei er zumindest in dem Bereich, mit dem er in den Messbereich 23 der Lumineszenz-Optik 10 positioniert wird, optisch transparent ist. Auf diese Weise ist sichergestellt, dass Lumineszenz-Licht, welches von einer Probe emittiert wird, ungehindert auf die Lumineszenz-Optik 10 fällt und ohne Intensitätsverlust auf den Detektor 12 weitergeleitet werden kann. Bevorzugt ist der Spritzschutz 16 aus Borosilikat-Glas hergestellt sein, welches unter dem Namen Borofloat^{®} von der der Firma Schott angeboten wird. Besonders bevorzugt ist der Spritzschutz 16 plättchenförmig und vollständig aus Borosilikat-Glas hergestellt.

In einer alternativen Ausführungsform ist der Spritzschutz 16 nicht für alle Wellenlängen optisch durchlässig sondern stattdessen als ein optischer Filter ausgebildet. Bevorzugt weist in diesem Fall der Spritzschutz 16 Filtereigenschaften auf, die ihn zumindest undurchlässig für Licht im Rotbereich, bevorzugt für Licht mit einer Wellenlänge 600 nm bis 800 nm, besonders bevorzugt für Licht mit einer Wellenlänge von 620 nm bis 750 nm machen. So wird von der Probe oder der Mikroplatte ausgestrahltes Licht im Rotbereich absorbiert.

Die Verwendung eines solchen alternativen Spritzschutzes 16 mit zusätzlicher Filterfunktion kann dann von Vorteil sein, wenn beispielsweise Autolumineszenzen von Mikroplatten 8 für die Lumineszenz-Messung im Rahmen eines bestimmten Assays weggefiltert werden sollen. Insbesondere bei der Verwendung von weissen Mikroplatten hat sich herausgestellt, dass Autolumineszenz-Signale, die von dem Material der weissen Mikroplatte herrühren, die tatsächliche Lumineszenz-Messung verfälschen können. Solche Autolumineszenz-Signale umfassen insbesondere Licht im Rotbereich, welches durch die entsprechende Filterfunktion des Spritzschutzes 16 während der Lumineszenz-Messung absorbiert wird.

Weisse Mikroplatten werden bevorzugt für Lumineszenz-Messungen verwendet, da durch die reflektierenden Eigenschaften das detektierbare Lumineszenz-Licht und damit die Lichtausbeute erhöht wird. Schwarze Mikroplatten werden vor allem bei Fluoreszenz-Messungen verwendet; für Lumineszenz-Messungen sind sie ungeeignet, da sie relativ viel Licht schlucken und somit die Signalintensität herabsetzen. Klare Mikroplatten könnten zwar Flash-Lumineszenz-Assays aufgrund des starken Signals verwendet werden; bei Assays, die auf Glow-Lumineszenz basieren, kommt es durch das klare Material zu Übersprechungen zwischen den einzelnen Wells, so dass ein gemessenes Signal derart verfälscht werden würde, dass es in der späteren Auswertung nicht reproduzierbar ist.

Figur 2 zeigt eine besonders bevorzugte Lumineszenz-Messvorrichtung 1, die zwei Injektoren 2,3 zum Abgeben von Flüssigkeiten umfasst. Diese besonders bevorzugte Ausführungsform ist speziell für das Durchführen von Flash-Lumineszenz-Messungen geeignet, da zum Auslösen einer Flash-Lumineszenz häufig zwei Lösungen verwendet werden:
Beispiel 1: HBsAg Chemolumineszenz Immuno-Assay der Firma DiaSorin S.p.A.

| | |
|---|---|
| Lösung A: | Natriumhydroxid zum Bereitstellen einer basischen Umgebung mit einer Peroxidase als ein Katalysator; |
| Lösung B: | Wasserstoffperoxid zum schlagartigen Start der Reaktion. |

Beispiel 2: ADVIA Centaur HBsAg Chemolumineszenz Immuno-Assay der Firma Bayer HealthCare, LLC.

| | |
|---|---|
| Lösung A: | Wasserstoffperoxid und Salpetersäure zum Bereitstellen einer sauren Umgebung; |
| Lösung B: | Natronlauge und ein Benetzungsmittel zum schlagartigen Start der Reaktion. |

Analog zum ersten Injektor 2 umfasst der zweite Injektor 3 ebenfalls eine Injektornadel 7 mit einem Auslassende 26 sowie eine Zuleitung 5, mit welcher Flüssigkeit der Injektornadel 7 zugeführt wird. In der Ausführungsform, wie sie in Figur 2 gezeigt ist, sind die Injektoren 2,3, insbesondere ihre Zuleitungen 4,5 im Wesentlichen vertikal gegenüber einer Mikroplatte 8 und damit im Wesentlichen parallel zu der optischen Achse des Lumineszenz-Detektors 12 angeordnet.

Eine vertikale Anordnung des Injektors 2 oder der Injektoren 2,3 ist insbesondere dann für Ausführungsformen bevorzugt, in denen die Lumineszenz-Optik 10 verschiebbar ausgebildet sein soll, um den Spritzschutz 16 auszutauschen. Eine horizontale Anordnung des Injektors 2 oder der Injektoren 2,3 ist insbesondere dann für Ausführungsformen bevorzugt, in denen der oder die Injektoren 2,3 verschiebbar ausgebildet sind, um den Spritzschutz 16 auszutauschen.

Das Auslassende 26 des zweiten Injektors 3 ist bevorzugt gegenüber dem Auslassende 25 des ersten Injektors 2 beabstandet angeordnet. Besonders bevorzugt ist, dass das Auslassende 2 des zweiten Injektors 3 um eine Distanz gegenüber dem Auslassende 25 des ersten Injektors 2 beabstandet ist, welche im Wesentlichen einem oder einem Mehrfachen eines Achsabstands der Wells 9 der Mikroplatte 8 entspricht. In Figur 2 sind die beiden Auslassenden 25,26 um eine Distanz voneinander beabstandet gezeigt, die im Wesentlichen einem dreifachen Achsabstand der Wells 9 der Mikroplatte entspricht. Wesentlich ist auch hier, dass sich die Injektornadel 6 des ersten Injektors 2 erfindungsgemäss auch in dieser Ausführungsform bis unter die Lumineszenz-Optik 10 erstreckt und mit ihrem Auslassende 25 in den Messbereich 23 der Lumineszenz-Optik 10 mündet. Zumindest ein Teil der Injektornadel 6 ist dabei unter der Lumineszenz-Optik 10 zur Lumineszenz-Messung angeordnet.

Durch die spezielle Anordnung der zwei Injektoren 2,3 kann zunächst mit dem zweiten Injektor 3 ein erstes Reagens, wie beispielsweise Lösung A in ein ausgewähltes Well 8 abgegeben werden, so dass in diesem Schritt beispielsweise die Reaktionsbedingungen (pH, Volumen, Puffereigenschaften etc.) eingestellt werden können. Zeitgleich kann in einem beabstandeten Well 8, in welches bereits Lösung A mit dem zweiten Injektor 3 zugegeben wurde, die eigentliche Reaktion durch Zugabe von Lösung B mit dem ersten Injektor 2 ausgelöst und mit der Lumineszenz-Messung in diesem beabstandeten Well 8 begonnen werden.

Durch die erfindungsgemässe Anordnung des durchgehenden Spritzschutzes 16 zwischen dem Auslassende 25 des ersten Injektors 2 und der Lumineszenz-Optik 10 kann zudem mit dem ersten Injektor 2 die Lösung A mit einem definierten Druck in das Well 9 in dem Messbereich 23 der Lumineszenz-Optik 10 abgegeben werden, so dass durch die Zugabe dieser Startlösung diese mit der Probe direkt vermischt wird, ohne dass Spritzer auf die empfindliche Lumineszenz-Optik 10 treffen.

Die Injektornadel 7 des zweiten Injektors 3 (der links gezeigte Injektor) kann ein einfacher Kunststoffschlauch sein, beispielsweise aus Polytetrafluorethylen (PTFE / Teflon^{®} der Firma DuPont). Ein solcher Kunststoffschlauch kann dabei eine einfache Verlängerung der Zuleitung 5 sein, die sich falls nötig zum Auslassende 26 hin verjüngt. Das Auslassende 26 kann so angeordnet sein, dass eine unter dem Auslassende 26 positionierte Mikroplatte 8 mit einem Well 9 so gegenüber dem Auslassende 26 positioniert werden kann, dass das Auslassende 26 genau mittig über dem Well 9 angeordnet ist (Figur 2). Alternativ kann das Auslassende 26 so angeordnet sein, dass es azentrisch über dem Well 9 angeordnet ist (nicht gezeigt).

In der in Figur 2 gezeigten, besonders bevorzugten Ausführungsform ist die Injektornadel 6 des ersten Injektors 2 S-förmig gebogen dargestellt. Auf diese Weise kann erreicht werden, dass die Zuleitung 4 des Injektors 2 vertikal und parallel zu der optischen Achse 20 der Lumineszenz-Optik 10 angeordnet ist, während dennoch gewährleistet ist, dass sie im Wesentlichen mit ihren Auslassende 25 in den Messbereich 23 der Lumineszenz-Optik 10 mündet und damit Flüssigkeit in das gleiche Well abgeben kann, auf das die Lumineszenz-Optik 10 zur Lumineszenz-Messung ausgerichtet ist.

Um diese Biegung zu erreichen, ist die Injektornadel 6 des ersten Injektors 2 bevorzugt aus einem Metall oder aus einem formstabilen Kunststoff hergestellt. Beispielsweise genannt sei hier PEEK (Polyetheretherketon).

Um das Flash-Lumineszenz-Signal möglichst zur Gänze zu erfassen, ist es im weiteren notwendig, die Reagenzienzugabe so durchzuführen, dass eine schnelle und vollständige Durchmischung der Reaktions-partner gewährleistet ist.

Zumindest im Bereich des Auslassendes 25 des ersten Injektors 2 ist eine gewisse Formstabilität wünschenswert, um einen konstanten, definierten Winkel des letzten Biegungsabschnitts zu gewährleisten. Dies erlaubt, dass Flüssigkeiten mit einem vorher bestimmbaren Druck und/oder einer vorher bestimmbaren Dispensiergeschwindigkeit in ein Well 9 abgegeben werden können und so der gewünschte Durchmischungseffekt der Reagenzien gesteuert werden kann. Neben der guten Durchmischung der Reagenzien, kann eine hohe Dispensiergeschwindigkeit in einem bestimmten Winkel auch dazu dienen, um Magnetic Beads als Bestandteil der Assays in der Probenflüssigkeit des Wells 9 mit der Reaktionslösung zu verwirbeln. Bevorzugt liegt der definierte Winkel im Bereich von 5° bis 15° zur optischen Achse 20.

Für bevorzugt alle Ausführungsformen der Lumineszenz-Messvorrichtung 1 können Halterungen 21 für die Zuleitungen 4,5 und/oder die Verbindungsstellen zwischen Zuleitung 4,5 und Injektornadel 6,7 für beide Injektoren 2,3 vorgesehen sein, wie in Figur 2 gezeigt ist. Optional können die Injektoren 2,3 in allen Ausführungsformen zudem von einem Gehäuse 19 umschlossen sein, in welchem solche Halterungen 21 befestigt sind. Der Vorteil der Verwendung eines Gehäuses 19 zumindest für die Injektor-Zuleitungen 4,5 besteht darin, dass, wie bereits zu Figur 1 besprochen, die umschlossenen Teile als Einheit einfach bewegt werden können.

Der erfindungsgemässe Spritzschutz 16 ist gemäss der in Figur 2 gezeigten Ausführungsform auf einer von einem Injektorgehäuse 19 separaten Halterung 17 platziert. Diese Halterung umfasst bevorzugt eine Auflagefläche, auf welche der plättchenförmige Spritzschutz 16 platziert werden kann. In einer besonders bevorzugten Ausführungsform wird der Spritzschutz 16 lediglich auf die Auflagefläche der Halterung 17 aufgelegt, ohne dass zusätzliche Befestigungsmittel zur Anwendung kommen, so dass der Spritzschutz 16 einfach ausgetauscht werden kann. Es kann vorgesehen sein, die Halterung an einem Gehäuse für den oder die Injektoren zu befestigen. Diese Variante ist bevorzugt, wenn der Spritzschutz 16 mit dem Injektor bewegbar sein soll.

Um das Austauschen des Spritzschutzes 16 zu ermöglichen, kann zumindest entweder die Lumineszenz-Optik 10 oder der oder die Injektoren 2,3 wegbewegt werden, damit der Spritzschutz 16 beispielsweise für Fachpersonal zugänglich ist. In Figur 1 ist eine Ausführungsform der Lumineszenz-Messvorrichtung gezeigt, in welcher der Injektor 2 mit dem Spritzschutz 16 und seiner Halterung 17 in X-Richtung verschiebbar sind. Auf diese Weise wird der Spritzschutz 16 aus der eng verbauten Umgebung von der Lumineszenz-Optik 10 wegbewegt und ist somit von oben oder von der Seite her zugänglich.

In der in Figur 2 gezeigten, besonders bevorzugten Ausführungsform ist die Lumineszenz-Optik 10 horizontal, also entlang der X-Achse eines dreidimensionalen Koordinatensystems, verschiebbar ausgebildet. Alternativ kann Optik auch entlang der Z-Achse nach oben verschoben werden, um den Spritzschutz zum Austauschen für Fachpersonal zugänglich zu machen (nicht gezeigt), oder sowohl Injektor als auch Optik sind bewegbar gegeneinander ausgebildet (nicht gezeigt); aus platzgründen kann diese Variante jedoch weniger bevorzugt sein.

Es kann vorgesehen sein, dass die Lumineszenz-Optik 10 motorisiert verschiebbar ausgebildet ist. Dazu umfasst sie einen Antrieb mit einer Antriebsstange 14 und einem Antriebsmotor 15. Es kann weiter vorgesehen sein, dass die Lumineszenz-Messvorrichtung 1 einen Wartungsbereich 24 umfasst, in welchen die Lumineszenz-Optik 10 in eine Wartungsposition so weit verschiebbar ist, dass der Spritzschutz 16 und dessen Halterung 17 von oben oder von der Seite zugänglich sind. Der Wartungsbereich 24 kann eine einfache Aussparung in Stützstrukturen der Lumineszenz-Messvorrichtung 1 oder in separaten Stützstrukturen sein. Zum Austauschen des Spritzschutzes 16 kann die Lumineszenz-Optik 10 dann motorisiert in die Aussparung verschoben werden, bis sie die Wartungsposition erreicht hat, in welcher der Zugang zum Spritzschutz 16 frei ist.

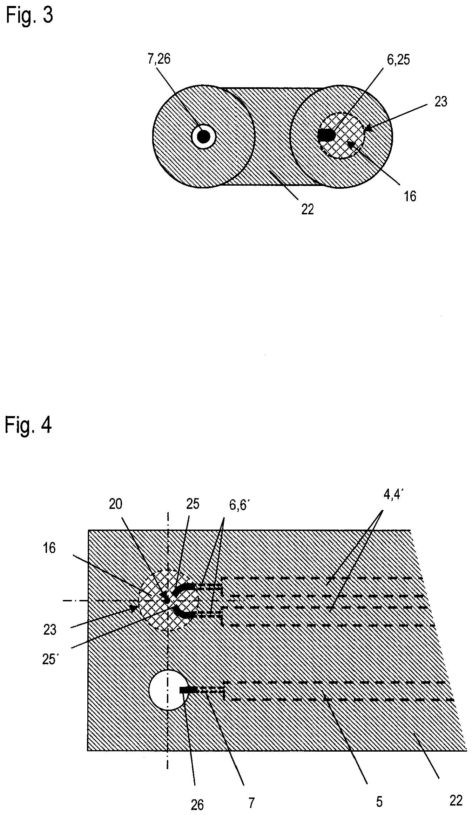

Figur 3 zeigt eine schematische Ausschnitts-Ansicht von unten auf die besonders bevorzugte Lumineszenz-Messvorrichtung gemäss Figur 2 auf die Schnittebene A. Gut zu sehen sind insbesondere die Stützstrukturen 22, mit welchem die beiden Injektoren 2,3 auf dem Boden der Lumineszenz-Messvorrichtung 1 befestigt sind. Gezeigt sind ebenfalls die Auslassenden 25,26 der beiden Injektoren 2,3 in einer Ansicht von unten. Im Bereich dieser Auslassenden 25,26 weisen die Stützstrukturen 22 jeweils eine Öffnung auf. Die Öffnung für die s-förmig gebogene Injektornadel ist grösser dimensioniert, um den Messbereich 23 der Lumineszenz-Optik 10 nicht durch diese Stützstrukturen 22 zu begrenzen. Durch dieselbe Öffnung ist der Spritzschutz 16 ebenfalls in dieser Ansicht erkennbar. Alternative Befestigungsmethoden in einem Mikroplatten-Reader 27 sind dem Fachmann an sich bekannt und werden hier nicht weiter diskutiert.

Die Öffnung für das Auslassende 26 des zweiten Injektors 3 kann an die gewünschte Situation angepasst werden; ein Fachmann würde sie im Durchmesser kleiner gestalten, wenn gewünscht ist, dass die Stützstrukturen den Bereich der Injektornadel 7 möglichst umschliessen und diese so stützen; oder sie könnte alternativ beispielsweise aus Platz- oder Gewichtsgründen grösser dimensioniert sein.

Figur 4 zeigt eine schematische Ausschnitts-Ansicht von unten auf eine Lumineszenz-Messvorrichtung 1, welche im Wesentlichen der aus Figur 1 entspricht, welche aber nicht nur eine sondern drei Injektorzuleitungen 4,4*'*,5 umfasst, die im Wesentlichen horizontal, also senkrecht zu der optischen Achse 20 der Lumineszenz-Optik 10, angeordnet sind. Im Vergleich zu der in Figur 1 gezeigten Anordnung sind die in Figur 4 gezeigten Zuleitungen 4,4*'*,5 spiegelverkehrt dargestellt. In der Seitenansicht der Lumineszenz-Messvorrichtung 1 wären die zusätzlichen Zuleitungen 4,4*'*,5 nicht zu sehen; in Figur 4 sind die Zuleitungen gestrichelt dargestellt.

Analog zu Figur 3 sind auch in Figur 4 die Stützstrukturen 22 gut sichtbar, an welchen insbesondere die jeweilige Zuleitung 4,4*'*,5 des Injektors 2 oder der Injektoren bevorzugt befestigt sind. Ebenfalls gut zu sehen sind die entsprechenden Öffnungen in den Stützstrukturen 22 für den oder die Auslässe der jeweiligen Injektornadeln 6,6*'*,7.

Gemäss Figur 4 kann die Lumineszenz-Messvorrichtung 1 zumindest zwei Injektoren ausweisen, deren Injektornadeln 6,6*'* so gegenüber der Lumineszenz-Optik 10 angeordnet sind, dass ihre Auslassenden 25,25*'* beide in den Messbereich 23 der Lumineszenz-Optik 10 münden. Bei dieser Anordnung ist also das Auslassende 25*'* des zweiten Injektors über dem gleichen Well 9 der Mikroplatte 8 positioniert ist wie das Auslassende 25 des ersten Injektors 2. Gut zusehen ist auch in dieser Ansicht der Spritzschutz 16.

Die in der Figur 4 gezeigte Zuleitung 5 eines dritten Injektors 3 ist mit ihrem Auslassende 26 gegenüber dem Auslassende 25,25*'* eines der beiden anderen Injektoren um eine Distanz beabstandet, welche dem Achsabstand eines Well 9 einer Mikroplatte 8 entspricht.

Eine mögliche Verschiebbarkeit der Injektoren ist in den Figuren 3 bis 6 nicht dargestellt. Die Ausführungen zu der Verschiebbarkeit zu den Figuren 1 und 2 treffen für alle hier beschriebenen Ausführungsformen zu und werden im Folgenden nicht nochmals wiederholt. Dies gilt ebenfalls für die Ausführungen zu den Ausführungsformen der übrigen Elemente der Lumineszenz-Messvorrichtung.

Die bisher beschriebenen Ausführungsformen und Varianten der erfindungsgemässen Lumineszenz-Messvorrichtung 1 können in einem sogenannten Luminometer, also in ein eigenständiges Gerät eingebaut sein. Solche Geräte sind nicht zwingend auf das Auslesen von Proben in einer Mikroplatte ausgelegt, sondern können ebenfalls für die Analyse von Proben in anderen Probengefässen wie Küvetten, Probenröhrchen, etc. angepasst sein. Die Ausführungen oben, die jeweils von einer Standard-Mikroplatte als Probengefäss ausgegangen sind, können auf solche andere Probengefässe übertragen werden.

Alternativ und besonders bevorzugt ist die erfindungsgemässe Lumineszenz-Messvorrichtung 1 in ein Mikroplatten-Reader 27 integriert, also in ein Gerät, welches speziell auf die Analyse von Proben in Standard-Mikroplatten 8 ausgebildet ist. Insbesondere der Schlitten 18 ist in einem solchen Mikroplatten-Reader 27 automatisiert und bevorzugt in alle drei Richtungen eines dreidimensionalen Koordinatensystems verfahrbar, so dass jedes Well 9 einer Mikroplatte 8 gegenüber jedem Injektor und jeder Optik exakt positionierbar ist.

Ebenfalls bevorzugt ist, dass möglichst der gesamte Versuchsablauf inklusive Positionieren der Wells gegenüber Messvorrichtungen und/oder Injektoren sowie die Injektion von Flüssigkeiten durch eine Steuereinheit 30 zentral kontrolliert ist. Eine solche Steuereinheit 30 ist in den Figuren 1, 2, 5 und 6 gezeigt. Es obliegt dem Wissen eines Fachmanns welche Abläufe in einem Mikroplatten-Reader 27 durch die Steuereinheit 30 kontrolliert werden.

Ein solcher besonders bevorzugter Mikroplatten-Reader 27 kann zusätzlich zu der erfindungsgemässen Lumineszenz-Messvorrichtung 1 weitere Messvorrichtungen 28,29 zum Messen eines Fluoreszenz-Signals von Proben in einem Well 9 einer Mikroplatte 8 und/oder zur zum Messen einer Absorption von Proben in einem Well 9 der Mikroplatte 8 umfassen. Das Prinzip von Fluoreszenz-Messungen in Mikroplatten-Readern 27 ist dem Fachmann an sich bekannt und wird daher an dieser Stelle nicht weiter erläutert. Ebenfalls bekannt ist das Messen einer Absorption einer Probe, wobei hier zunächst das von einer Probe transmittierte (durchgelassene) Licht bestimmt und daraus die Absorption von Licht durch die Probe berechnet wird. Solche Mikroplatten-Reader 27, mit welchen mehr als ein Signal optisch gemessen werden können, werden auch Multimode-Reader genannt.

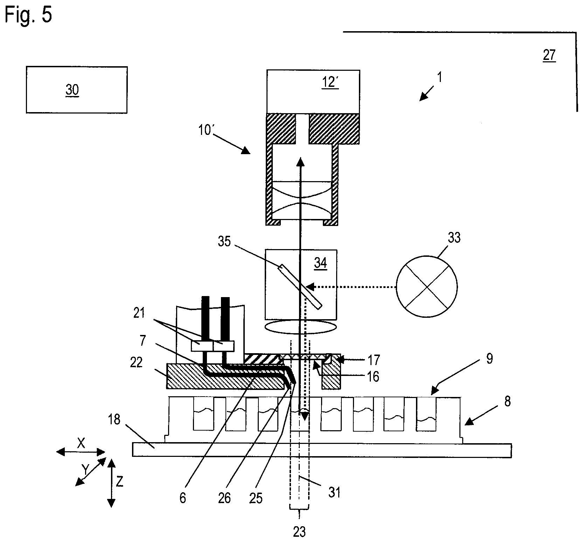

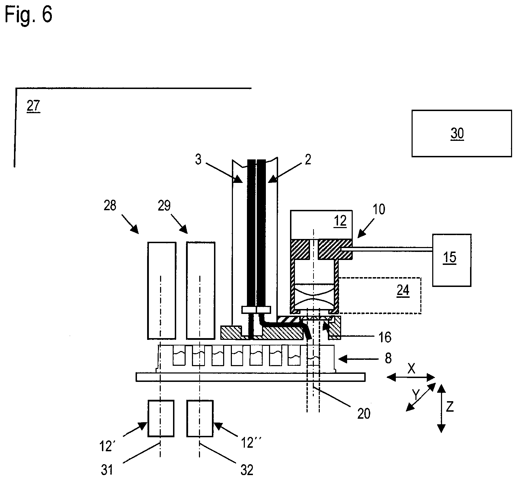

In den Figuren 5 und 6 sind jeweils verschiedene Multimode-Reader 27 gezeigt, welche die Lumineszenz-Messvorrichtung 1 mit dem erfindungsgemäss angeordneten Spritzschutz 16 umfassen. Die Lumineszenz-Messvorrichtung 1 umfasst weiterhin zumindest den ersten Injektor 2, dessen Injektornadel 6 wie zuvor beschrieben sich bis unter die Lumineszenz-Optik 10 erstreckt und mit ihrem Auslassende 25 in den Messbereich 23 der Lumineszenz-Optik 10 mündet. Mit dieser Injektornadel 6 kann beispielsweise ein Reagens zum Auslösen einer Lumineszenz in das gleiche Well 9 abgegeben werden, auf welches auch die Lumineszenz-Optik 10 mit ihrer optischen Achse 20 ausgerichtet ist.

Der in Figur 5 gezeigte Mikroplatten-Reader 27 ist speziell für das Erfassen eines Flash-Fluoreszenz-Signals einer Probe ausgebildet. Dazu umfasst der Mikroplatten-Reader 27 eine Anordnung zum Messen einer Flash-Fluoreszenz in einem Well 9 mit beispielsweise zwei Injektoren, deren Injektornadeln 7 mit ihren Auslassenden 25,26 beide in den Messbereich 23 einer Optik, die als eine Fluoreszenz-Optik 10' ausgebildet ist, mündet. Zur besseren Illustration sind dabei die Injektornadeln 6,7 übereinander dargestellt; bevorzugt ist aber auch in dieser Ausführungsform, dass die beiden Injektornadeln 6,7 nebeneinander angeordnet sind, wie es in Figur 4 angedeutet ist.

Zudem ist zwischen der Fluoreszenz-Optik 10*'* und dem Spritzschutz 16 eine Optik 34 mit einem Dichroidspiegel 35 angeordnet. Mit einer Lichtquelle 33 kann Anregungslicht über den Dichroidspiegel 35 auf die Probe in dem Well 9 gelenkt werden, welches in dem Messbereich 23 der Fluoreszenz-Optik 10*'* positioniert ist (dargestellt durch gestrichelte Pfeile). Von der Probe kommendes FluoreszenzLicht wird dann mittels der Fluoreszenz-Optik 10*'* auf einen Detektor 12*'* für Fluoreszenzlicht gelenkt (dargestellt durch durchgehende Pfeile).

Obwohl in Figur 5 nicht gezeigt, kann sich die Fluoreszenz-Optik 10*'* auch unter dem Well 9 befinden (sogenanntes bottom-Reading). In dieser Konfiguration schützt der Spritzschutz 16 die Optik 34 mit Dichroidspiegel 35 vor Spritzern. Anstelle der Fluoreszenz-Optik 10*'* kann auch eine Fluoreszenz Imaging Vorrichtung vorgesehen sein.

Mit der über diesem Well 9 angeordneten Fluoreszenz-Optik 10*'*,33,34,12*'* kann dann die Messung eine resultierenden Flash-Fluoreszenz analog zu einer zuvor beschriebenen Flash-Lumineszenz im Wesentlichen zeitgleich mit der Injektion des die Flash-Lumineszenz auslösenden Reagens gestartet werden. In der Neuronenforschung werden Farbstoffe eingesetzt, die sehr schnell auf Änderungen der Zellmembranenpotentiale reagieren. Über einen Injektor können Reagenzien zu Zellsuspensionen zugegeben werden, die eine Potentialänderung bewirken, die wiederum eine Farbreaktion auslösen. Die Farbreaktion kann in einer Flash-Fluoreszenz oder einer Flash-Absorptionsänderung bestehen (Übersichtsartikel: Joel C. Glover et al., Dev. Neurobiol. 2008 May; 68(6):804-16).

Aufgrund der erfindungsgemässen Anordnung des Spritzschutzes 16 ist die empfindliche Optik, die oberhalb des Wells 9, in das ein Reagens abgegeben wurde, vor Spritzern geschützt.

Die Anordnung des Detektors 12*'* für Fluoreszenz oberhalb des Wells ist als sogenannte top-Reading Anordnung an sich bekannt; alternativ kann die Fluoreszenz der Probe auch mit einer sogenannten bottom-Reading Anordnung detektiert werden. Eine solche Anordnung ist in Figur 6 skizziert, ebenso wie eine an sich bekannte Anordnung einer Messvorrichtung 29 zur Absorptionsmessung mit einem unterhalb der Mikroplatte positionierten Detektor für Absorption. Der in Figur 6 gezeigte Multimode-Reader umfasst damit neben der erfindungsgemässen Lumineszenz-Messvorrichtung 1 mit dem Spritzschutz 16 zudem aus Mikroplatten-Readern an sich bekannte Messsysteme zur Messung von Fluoreszenz-Signalen und zur Messung einer Absorption einer Probe.

Die vorliegende Erfindung betrifft zudem ein Verfahren zum Messen eines Lumineszenz-Signals einer Probe in einem Well 9 einer Mikroplatte 8. Es umfasst die folgenden Schritte:
- Bereitstellen einer Lumineszenz-Messvorrichtung 1, welche umfasst:
   - einen ersten Injektor 2 zum Abgeben eines Reagens in ein Well 9 einer Mikroplatte 8, wobei der Injektor 2 eine Injektornadel 6 mit einem Auslassende 25 umfasst,
   - eine Lumineszenz-Optik 10 mit einer vertikal verlaufenden optischen Achse 20 und einem die optische Achse 20 umschliessenden Messbereich 23 zum Messen eines Lumineszenz-Signals einer Probe in einem Well 9 einer Mikroplatte 8,
      wobei die Injektornadel 6)des Injektors 2 sich bis unter die Lumineszenz-Optik 10 erstreckt und mit ihrem Auslassende 25 in den Messbereich der Lumineszenz-Optik 10 mündet, und
   - einen Spritzschutz 16, welcher über dem Auslassende 25 des Injektors 2 und unter der Lumineszenz-Optik 10 angeordnet ist, und welcher sich im Wesentlichen senkrecht zu der optischen Achse 20 erstreckt und zumindest den Messbereich 23 der Lumineszenz-Optik 10 vollständig abdeckt,
- Abgeben eines Reagens in ein Well 9 einer Mikroplatte 8 mittels des Injektors 2,
- Messen eines Lumineszenz-Signals der Probe in demselben Well 9 der Mikroplatte 8 entlang der optischen Achse 20 und in dem Messbereich 23 der Lumineszenz-Optik 10,
wobei das Abgeben eines Reagens im Wesentlichen zeitgleich mit dem Starten der Messung des Lumineszenz-Signals der Probe in dem gleichen Well 9 im Wesentlichen zeitgleich erfolgt.

Sofern die Lumineszenz-Messvorrichtung 1 einen weiteren Injektor zum Auslösen einer Flash-Lumineszenz umfasst, kann das Verfahren wie folgt durchgeführt werden:
- Bereitstellen einer Lumineszenz-Messvorrichtung 1, welche umfasst:
   - einen ersten Injektor 2 zum Abgeben eines Reagens in ein Well 9 einer Mikroplatte 8, wobei der erste Injektor 2 eine Injektornadel 6 mit einem Auslassende 25 umfasst,
   - eine Lumineszenz-Optik 10 mit einer im Wesentlichen senkrecht zur Mikroplatte 8 verlaufenden optischen Achse 20 und einem die optische Achse 20 umschliessenden Messbereich 23 zum Messen eines Lumineszenz-Signals einer Probe in einem Well 9 der Mikroplatte 8,
      wobei die Injektornadel 6 des ersten Injektors 2 sich bis unter die Lumineszenz-Optik 10 erstreckt und mit ihrem Auslassende 25 in den Messbereich 23 der Lumineszenz-Optik 10 mündet,
   - einen Spritzschutz 16, welcher über dem Auslassende 25 des Injektors 2 und unter der Optik 10 angeordnet ist, und welcher sich im Wesentlichen senkrecht zu der optischen Achse 20 erstreckt und zumindest den Messbereich 23 der Lumineszenz-Optik 10 vollständig abdeckt, und
   - einen zweiten Injektor 3, welcher eine Injektornadel 7 und ein Auslassende 26 umfasst, wobei das Auslassende 26 des zweiten Injektors 3 gegenüber dem Auslassende des ersten Injektors 2 um eine Distanz gegenüber dem Auslassende 25 des ersten Injektors 2 beabstandet ist, welche einem oder einem Mehrfachen eines Achsabstands der Wells der Mikroplatte 8 entspricht,
- Abgeben eines ersten Reagens in ein Well 9 der Mikroplatte mit dem zweiten Injektor 3,
- falls nötig Verschieben der Mikroplatte 8 mit dem Schlitten 18 und Positionieren dieses Wells 9 in den Messbereich 23 der Lumineszenz-Optik 10,
- Abgeben eines zweiten Reagens mit dem ersten Injektor 2 in dasselbe Well 9,
- Messen eines Flash-Lumineszenz-Signals der Probe in demselben Well 9 der Mikroplatte 8 entlang der optischen Achse 20 und in dem Messbereich 23 der Lumineszenz-Optik 10,
wobei das Abgeben des zweiten Reagens im Wesentlichen zeitgleich mit dem Starten der Messung des Flash-Lumineszenz-Signals der Probe in dem gleichen Well 9 erfolgt.

**Bezugszeichenliste:**

| | | | |
|---|---|---|---|
| 1 | Lumineszenz-Messvorrichtung | 17 | Halterung für 16 |
| | | 18 | Schlitten |
| 2 | erster Injektor | 19 | Gehäuse von 2,3 |
| 3 | zweiter Injektor | 20 | optische Achse von 10 |
| 4 | Zuleitung von 2 | 21 | Halterungen für 4,5 |
| 5 | Zuleitung von 3 | 22 | Stützstruktur |
| 6 | Injektornadel von 2 | 23 | Messbereich von 10 |
| 7 | Injektornadel von 3 | 24 | Wartungsbereich von 1 |
| 8 | Mikroplatte | 25 | Auslassende von 6 |
| 9 | Wells von 8 | 26 | Auslassende von 7 |
| 10 | Lumineszenz-Optik | 27 | Mikroplatten-Reader |
| 10' | Fluoreszenz-Optik | 28 | Messvorrichtung zur Fluoreszenz-Messung |
| 10" | Optik für Absorptionsmessungen | 29 | Messvorrichtung zur Absorptions-Messung |
| 11 | Linsensystem von 10 | | |
| 12 | Lumineszenzdetektor | 30 | Steuereinheit |
| 12' | Fluoreszenzdetektor | 31 | optische Achse von 28 |
| 12" | Detektor für Absorptionsmessungen | 32 | optische Achse von 29 |
| | | 33 | Lichtquelle |
| 13 | Gehäuse von 10 | 34 | Optik |
| 14 | Antriebsstange | 35 | Dichroidspiegel |
| 15 | Antriebsmotor | | |
| 16 | Spritzschutz | | |

## Patentansprüche

1. Messvorrichtung (1,28,29) zum Messen von Licht-Signalen, die von Proben in Wells (9) einer Mikroplatte (8) ausgesendet werden, wobei die Messvorrichtung (1,28,29) umfasst:
- einen ersten Injektor (2) zum Abgeben eines Reagens in ein Well (9) einer Mikroplatte (8), wobei der Injektor (2) eine Injektornadel (6) mit einem Auslassende (25) umfasst, und
- eine Optik (10,10*'*,10*"*) mit einer im Wesentlichen senkrecht zur Mikroplatte (8) verlaufenden optischen Achse (20,31,32) und einem die optische Achse (20,31,32) umschliessenden Messbereich (23) zum Messen eines Licht-Signals einer Probe in einem Well (9) der Mikroplatte (8),
wobei die Injektornadel (6) des Injektors (2) sich bis unter die Optik (10,10*'*,10*"*) erstreckt und mit ihrem Auslassende (25) in den Messbereich (23) der Optik (10,10*'*,10*"*) mündet, so dass in demselben Well (9) der Mikroplatte (8) mit der Optik (10,10*'*,10*"*) gemessen und mit dem Injektor (2) ein Reagens abgegeben werden kann,
wobei die Messvorrichtung (1,28,29) einen Spritzschutz (16) umfasst, welcher zwischen dem Auslassende (25) des Injektors (2) und der Optik (10,10*'*,10*"*) angeordnet ist, und welcher sich im Wesentlichen senkrecht zu der optischen Achse (20,31,32) erstreckt,
**dadurch gekennzeichnet, dass** der Spritzschutz zumindest den Messbereich (23) der Optik (10,10*'*,10*"*) vollständig abdeckt,
wobei an dem Injektor (2) eine Halterung (17) befestigt ist, welche den Spritzschutz (16) hält.

2. Messvorrichtung (1,28,29) nach Anspruch 1, welche eine Lumineszenz-Messvorrichtung (1) zum Messen von Lumineszenz-Signalen von Proben in Wells (9) einer Mikroplatte (8) ist, wobei die Optik (10,10*'*,10*"*) eine Lumineszenz-Optik (10) mit einer im Wesentlichen senkrecht zur Mikroplatte (8) verlaufenden optischen Achse (20) und einem die optische Achse (20) umschliessenden Messbereich (23) zum Messen eines Lumineszenz-Signals einer Probe in einem Well (9) der Mikroplatte (8) ist.

3. Messvorrichtung (1,28,29) nach Anspruch 1 oder 2,
**dadurch gekennzeichnet, dass** der Injektor (2) von einem Gehäuse (19) umschlossen ist, und dass die Halterung (17) für den Spritzschutz (16) an dem Gehäuse (19) befestigt ist.

4. Messvorrichtung (1,28,29) nach einem der vorhergehenden Ansprüche, **dadurch gekennzeichnet, dass** die Halterung (17) eine obere Auflagefläche umfasst, auf welche der Spritzschutz (16) auflegbar ist.

5. Messvorrichtung (1,28,29) nach einem der vorhergehenden Ansprüche, **dadurch gekennzeichnet, dass** der Spritzschutz (16) optisch transparent ist.

6. Messvorrichtung (1,28,29) nach Anspruch 5, **dadurch gekennzeichnet, dass** der Spritzschutz (16) mindestens teilweise aus einem Borosilikat-Glas hergestellt ist.

7. Messvorrichtung (1,28,29) nach einem der Ansprüche 1 bis 4, **dadurch gekennzeichnet, dass** der Spritzschutz (16) ein optischer Filter ist, welcher zumindest undurchlässig ist für Licht im Rotbereich.

8. Messvorrichtung (1,28,29) nach einem der vorhergehenden Ansprüche, **dadurch gekennzeichnet, dass** der Spritzschutz (16) ein Plättchen ist.

9. Messvorrichtung (1,28,29) nach einem der vorhergehenden Ansprüche, **dadurch gekennzeichnet, dass** der Injektor (2) eine Zuleitung (4) umfasst, welche zu der Optik (10,10*'*,10*"*) und ihrer optischen Achse (20,31,32) beabstandet angeordnet ist, und dass die Injektornadel (6) mit einem dem Auslassende (25) gegenüberliegenden Ende mit der Zuleitung (4) verbunden ist.

10. Messvorrichtung (1,28,29) nach einem der vorhergehenden Ansprüche, **dadurch gekennzeichnet, dass** sie einen zweiten Injektor (3) zum Abgeben eines Reagens in ein Well (9) der Mikroplatte (8) umfasst, wobei der zweite Injektor (3) eine Injektornadel (7) mit einem Auslassende (26) umfasst, **und dass** das Auslassende (26) des zweiten Injektors (3) gegenüber dem Auslassende (25) des ersten Injektors (2) beabstandet angeordnet ist.

11. Messvorrichtung (1,28,29) nach Anspruch 10, **dadurch gekennzeichnet, dass** das Auslassende (26) des zweiten Injektors (3) um eine Distanz gegenüber dem Auslassende (25) des ersten Injektors (2) beabstandet ist, welche im Wesentlichen einem oder einem Mehrfachen eines Achsabstands der Wells (9) der Mikroplatte (8) entspricht.

12. Messvorrichtung (1,28,29) nach Anspruch 10 oder 11, **dadurch gekennzeichnet, dass** der erste Injektor (2) und der zweite Injektor (3) von einem Gehäuse (19) umschlossen sind, **und dass** an dem Gehäuse (19) eine Halterung (17) für den Spritzschutz (16) befestigt ist.

13. Messvorrichtung (1,28,29) nach einem der vorhergehenden Ansprüche, **dadurch gekennzeichnet, dass** die Optik (10,10*'*,10*"*) horizontal verschiebbar ausgebildet ist.

14. Messvorrichtung (1,28,29) nach Anspruch 13, **dadurch gekennzeichnet, dass** sie zum Verschieben der Optik (10,10*'*,10*"*) einen Antrieb mit einer Antriebsstange (14) und einem Antriebsmotor (15) umfasst.

15. Messvorrichtung (1,28,29) nach Anspruch 13 oder 14, **dadurch gekennzeichnet, dass** sie einen Wartungsbereich (24) umfasst, in welchen die Optik (10,10',10") in eine Wartungsposition so weit verschiebbar ist, dass der Spritzschutz (16) und dessen Halterung (17) zugänglich sind.

16. Mikroplatten-Reader (27) zum Messen von Licht-Signalen, die von Proben in Wells (9) einer Mikroplatte (8) ausgesendet werden, wobei der Mikroplatten-Reader (27) umfasst:
- eine Lumineszenz-Messvorrichtung (1) nach einem der Ansprüche 2 bis 15,
- zumindest eine Messvorrichtung (28,29), ausgewählt aus einer Gruppe, die umfasst:
- eine Messvorrichtung (28) zum Messen eines Fluoreszenz-Signals von Proben in Wells (9) einer Mikroplatte (8), welche einen Detektor (12') für Fluoreszenzlicht umfasst, und
- eine Messvorrichtung (29) zum Messen einer Absorption von Proben in Wells (9) der Mikroplatte (8), welcher einen Detektor (12") für Absorptionsmessungen umfasst; und
- einen Schlitten (18) zum Aufnehmen der Mikroplatte (8) und zum Positionieren der aufgenommenen Mikroplatte (8) gegenüber der oder den Messvorrichtungen (1,28,29).

17. Verfahren zum Messen eines Licht-Signals einer Probe in einem Well (9) einer Mikroplatte (8), umfassend die folgenden Schritte:
- Bereitstellen einer Messvorrichtung (1), welche umfasst:
- einen ersten Injektor (2) zum Abgeben eines Reagens in ein Well (9) einer Mikroplatte (8), wobei der Injektor (2) eine Injektornadel (6) mit einem Auslassende (25) umfasst,
- eine Optik (10,10*'*,10*"*) mit einer im Wesentlichen senkrecht zur Mikroplatte (8) verlaufenden optischen Achse (20,31,32) und einem die optische Achse (20,31,32) umschliessenden Messbereich (23) zum Messen eines Licht-Signals einer Probe in einem Well (9) der Mikroplatte (8),
wobei die Injektornadel (6) des Injektors (2) sich bis unter die Optik (10,10*'*,10*"*) erstreckt und mit ihrem Auslassende (25) in den Messbereich (23) der Optik (10,10*'*,10*"*) mündet, und
- einen Spritzschutz (16), welcher über dem Auslassende (25) des Injektors (2) und unter der Optik (10,10*'*,10*"*) angeordnet ist, und welcher sich im Wesentlichen senkrecht zu der optischen Achse (20) erstreckt und zumindest den Messbereich (23) der Optik (10,10*'*,10*"*) vollständig abdeckt, wobei an dem Injektor (2) eine Halterung (17) befestigt ist, welche den Spritzschutz (16) hält,
- Abgeben eines Reagens in ein Well (9) der Mikroplatte (8) mittels des Injektors (2),
- Messen eines Licht-Signals der Probe in einem Well (9) der Mikroplatte (8) entlang der optischen Achse (20,31,32) und in dem Messbereich (23) der Optik (10,10*'*,10*"*),
wobei das Abgeben des Reagens und das Messen des Licht-Signals der Probe in dem gleichen Well (9) erfolgen.

18. Verfahren zum Messen eines Licht-Signals einer Probe in einem Well (9) einer Mikroplatte (8), umfassend die folgenden Schritte:
- Bereitstellen einer Messvorrichtung (1), welche umfasst:
- einen ersten Injektor (2) zum Abgeben eines Reagens in ein Well (9) einer Mikroplatte (8), wobei der erste Injektor (2) eine Injektornadel (6) mit einem Auslassende (25) umfasst,
- eine Optik (10,10*'*,10*"*) mit einer im Wesentlichen senkrecht zur Mikroplatte (8) verlaufenden optischen Achse (31) und einem die optische Achse (31) umschliessenden Messbereich (23) zum Messen eines Licht-Signals einer Probe in einem Well (9) der Mikroplatte (8),
wobei die Injektornadel (6) des ersten Injektors (2) sich bis unter die Optik (10,10*'*,10*"*) erstreckt und mit ihrem Auslassende (25) in den Messbereich (23) der Optik (10,10*'*,10*"*) mündet,
- einen Spritzschutz (16), welcher über dem Auslassende (25) des Injektors (2) und unter der Optik (10,10*'*,10*"*) angeordnet ist, und welcher sich im Wesentlichen senkrecht zu der optischen Achse (31) erstreckt und zumindest den Messbereich (23) der Optik (10,10*'*,10*"*) vollständig abdeckt, wobei an dem Injektor (2) eine Halterung (17) befestigt ist, welche den Spritzschutz (16) hält, und
- einen zweiten Injektor (3), welcher eine Injektornadel (7) und ein Auslassende (26) umfasst, wobei das Auslassende (26) des zweiten Injektors (3) gegenüber dem Auslassende des ersten Injektors (2) um eine Distanz gegenüber dem Auslassende (25) des ersten Injektors (2) beabstandet ist, welche einem oder einem Mehrfachen eines Achsabstands der Wells der Mikroplatte (8) entspricht,
- Abgeben eines ersten Reagens in ein Well (9) der Mikroplatte mit dem zweiten Injektor (3),
- Abgeben eines zweiten Reagens mit dem ersten Injektor (2) in ein Well (9),
- Messen eines Licht-Signals der Probe in einem Well (9) der Mikroplatte (8) entlang der optischen Achse (20) und in dem Messbereich (23) der Optik (10,10*'*,10*"*), wobei das Abgeben des zweiten Reagens und das Messen des Licht-Signals der Probe in dem gleichen Well (9) erfolgen.

## Claims

1. Measuring device (1,28,29) for the measurement of light signals emitted from samples in wells (9) of a microplate (8), wherein the measuring device comprises (1,28,29):
- a first injector (2) for dispensing a reagent into a well (9) of a microplate (8), wherein the injector (2) comprises an injector needle (6) having an outlet end (25), and
- an optical device (10, 10',10") having an optical axis (20,31,32) extending substantially perpendicularly to the microplate (8) and a measuring region (23) surrounding the optical axis (20,31,32) for measuring a light signal of a sample in a well (9) of the microplate (8),
wherein the injector needle (6) of the injector (2) extends to below the optical device (10,10',10") and opens with its outlet end (25) into the measuring region (23) of the optical device (10,10',10"), so that measurement can be carried out in the same well (9) of the microplate (8) with the optical device (10,10',10") and a reagent can be dispensed with the injector (2),
wherein the measuring device (1,28,29) comprises a splash deflector (16), which is arranged between the outlet end (25) of the injector (2) and the optical device (10,10',10"), and which extends substantially perpendicularly to the optical axis (20,31,32)
**characterized in that** the splash deflector (16) completely covers at least the measuring region (23) of the optical device (10,10',10"), wherein a holder (17), which holds the splash deflector (16), is attached to the injector (2).

2. Measuring device (1,28,29) according to claim 1 which is a luminescence measuring device (1) for measuring luminescence signals of samples in wells (9) of a microplate (8), wherein the optical device (10,10',10") is a luminescence optical device (10) having an optical axis (20) extending substantially perpendicularly to the microplate (8) and a measuring region (23) surrounding the optical axis (20) for measuring a luminescence signal of a sample in a well (9) of the microplate (8).

3. Measuring device (1,28,29) according to claims 1 or 2, **characterized in that** the injector (2) is enclosed by a housing (19), and that the holder (17) for the splash deflector (16) is fastened to the housing (19).

4. Measuring device (1,28,29) according to one of the preceding claims, **characterized in that** the holder (17) comprises an upper support surface on which the splash deflector (16) can be placed.

5. Measuring device (1,28,29) according to one of the preceding claims, **characterized in that** the splash deflector (16) is optically transparent.

6. Measuring device (1,28,29) according to claim 5, **characterized in that** the splash deflector (16) is at least partially made of a borosilicate glass.

7. Measuring device (1,28,29) according to one of the claims 1 to 4, **characterized in that** the splash deflector (16) is an optical filter, which is at least impermeable to light in the red region.

8. Measuring device (1,28,29) according to one of the preceding claims, **characterized in that** the splash deflector (16) is a platelet.

9. Measuring device (1,28,29) according to one of the preceding claims, **characterized in that** the injector (2) comprises a supply line (4), which is arranged at a distance from the optical device (10,10',10") and its optical axis (20, 31, 32), and that the injector needle (6) is connected to the supply line (4) with an end opposite to the outlet end (25).

10. Measuring device (1,28,29) according to one of the preceding claims, **characterized in that** it comprises a second injector (3) for dispensing a reagent into a well (9) of the microplate (8), wherein the second injector (3) comprises an injector needle (7) with an outlet end (26), **and that** the outlet end (26) of the second injector (3) is arranged at a distance from the outlet end (25) of the first injector (2).

11. Measuring device (1,28,29) according to claim 10, **characterized in that** the outlet end (26) of the second injector (3) is spaced apart from the outlet end (25) of the first injector (2) by a distance, which corresponds substantially to one or a multiple of an axial distance of the well (9) of the microplate (8).

12. Measuring device (1,28,29) according to claim 10 or 11, **characterized in that** the first injector (2) and the second injector (3) are enclosed by a housing (19), **and that** a holder (17) for the splash deflector (16) is attached to the housing (19).

13. Measuring device (1,28,29) according to one of the preceding claims, **characterized in that** the optical device (10,10',10") is configured such that it can be displaced horizontally.

14. Measuring device (1,28,29) according to claim 13, **characterized in that** it comprises a drive with a drive rod (14) and a drive motor (15) for displacing the optical device (10,10',10").

15. Measuring device (1,28,29) according to claim 13 or 14, **characterized in that** it comprises a maintenance region (24) into which the optical device (10,10',10") can be displaced into a maintenance position to such an extent that the splash deflector (16) and its holder (17) are accessible.

16. Microplate reader (27) for measuring of light signals emitted from samples in wells (9) of a microplate (8), wherein the microplate reader (27) comprises:
- a luminescence measuring device (1) according to one of the claims 2 to 15
- at least one measuring device (28, 29) selected from a group comprising:
- a measuring device (28) for measuring a fluorescence signal from samples in wells (9) of a microplate (8), comprising a detector (12') for fluorescence light, and
- a measuring device (29) for measuring an absorption of samples in wells (9) of the microplate (8), comprising a detector (12") for absorption measurements; and
- a carriage (18) for receiving the microplate (8) and for positioning the received microplate (8) in relation to the measuring device or devices (28, 29).

17. Method for measuring a light signal of a sample in a well (9) of a microplate (8), comprising the following steps:
- providing a measuring device (1), which comprises:
- a first injector (2) for dispensing a reagent into a well (9) of a microplate (8), wherein the injector (2) comprises an injector needle (6) having an outlet end (25),
- an optical device (10,10',10") having an optical axis (20,31,32) extending substantially perpendicularly to the microplate (8) and a measuring region (23) surrounding the optical axis (20,31,32) for measuring a light signal of a sample in a well (9) of the microplate (8),
wherein the injector needle (6) of the injector (2) extends below the optical device (10,10',10") and opens with its outlet end (25) into the measuring region (23) of the optical device (10,10',10"), and
- a splash deflector (16), which is arranged above the outlet end (25) of the injector (2) and below the optical device (10,10',10"), and which extends substantially perpendicularly to the optical axis (20) and completely covers at least the measuring region (23) of the optical device (10,10',10"), wherein a holder (17), which holds the splash deflector (16), is attached to the injector (2),
- dispensing a reagent into a well (9) of the microplate (8) by means of the injector (2),
- measuring a light signal of the sample in a well (9) of the microplate (8) along the optical axis (20,31,32) and in the measuring region (23) of the optical device (10,10',10"),
wherein the dispensing of the reagent and the measurement of the light signal of the sample are carried out in the same well (9).

18. Method for measuring a light signal of a sample in a well (9) of a microplate (8), comprising the following steps:
- providing a measuring device (1), which comprises:
- a first injector (2) for dispensing a reagent into a well (9) of a microplate (8), wherein the injector (2) comprises an injector needle (6) having an outlet end (25),
- an optical device (10,10',10") having an optical axis (31) extending substantially perpendicularly to the microplate (8) and a measuring region (23) surrounding the optical axis (31) for measuring a light signal of a sample in a well (8) of the microplate (8),
wherein the injector needle (6) of the first injector (2) extends to below the optical device (10,10',10") and opens with its outlet end (25) into the measuring region (23) of the optical device (10,10',10"),
- a splash deflector (16), which is arranged above the outlet end (25) of the injector (2) and below the optical device (10,10',10"), and which extends substantially perpendicularly to the optical axis (31) and completely covers at least the measuring region (23) of the optical device (10,10',10"), wherein a holder (17), which holds the splash deflector (16), is attached to the injector (2), and
- a second injector (3) comprising an injector needle (7) and an outlet end (26), wherein the outlet end (26) of the second injector (3) is spaced from the outlet end of the first injector (2) by a distance from the outlet end (25) of the first injector (2) corresponding to one or a multiple of an axial distance of the wells of the microplate (8),
- dispensing a first reagent into a well (9) of the microplate with the second injector (3),
- dispensing a second reagent with the first injector (2) into a well (9),
- measuring a light signal of the sample in a well (9) of the microplate (8) along the optical axis (20) and in the measuring region (23) of the optical device (10,10',10"),
wherein the dispensing of the second reagent and the measurement of the light signal of the sample are carried out in the same well (9).

## Revendications

1. Dispositif de mesure (1, 28, 29) servant à mesurer des signaux lumineux qui sont émis par des échantillons dans des puits (9) d'une microplaque (8), le dispositif de mesure (1, 28, 29) comprenant :
- un premier injecteur (2) pour délivrer un réactif dans un puits (9) d'une microplaque (8), l'injecteur (2) comprenant une aiguille d'injecteur (6) dotée d'une extrémité de sortie (25), et
- une optique (10, 10', 10") avec un axe optique (20, 31, 32) s'étendant sensiblement perpendiculairement à la microplaque (8) et une zone de mesure (23) entourant l'axe optique (20, 31, 32) pour mesurer un signal lumineux d'un échantillon dans un puits (9) de la microplaque (8),
dans lequel l'aiguille d'injecteur (6) de l'injecteur (2) s'étend jusque sous l'optique (10, 10', 10") et débouche, avec son extrémité de sortie (25), dans la zone de mesure (23) de l'optique (10, 10', 10"), de sorte que dans le même puits (9) de la microplaque (8), il est possible de mesurer avec l'optique (10, 10', 10") et de délivrer un réactif avec l'injecteur (2),
dans lequel le dispositif de mesure (1, 28, 29) comprend une protection contre les giclées (16) qui est agencée entre l'extrémité de sortie (25) de l'injecteur (2) et l'optique (10, 10', 10") et qui s'étend sensiblement perpendiculairement à l'axe optique (20, 31, 32),
**caractérisé en ce que** la protection contre les giclées recouvre complètement au moins la zone de mesure (23) de l'optique (10, 10', 10"), un support (17) soutenant la protection contre les giclées (16) étant fixé sur l'injecteur (2).

2. Dispositif de mesure (1, 28, 29) selon la revendication 1, étant particulièrement un dispositif de mesure de luminescence (1) destiné à mesurer des signaux de luminescence d'échantillons dans des puits (9) d'une microplaque (8), l'optique (10, 10', 10") étant une optique de luminescence (10) avec un axe optique (20) s'étendant sensiblement perpendiculairement à la microplaque (8) et une zone de mesure (23) entourant l'axe optique (20) destinée à mesurer un signal de luminescence d'un échantillon dans un puits (9) de la microplaque (8).

3. Dispositif de mesure (1, 28, 29) selon la revendication 1 ou 2, **caractérisé en ce que** l'injecteur (2) est entouré d'un boîtier (19), et **en ce que** le support (17) pour la protection contre les giclées (16) et fixé sur le boîtier (19).

4. Dispositif de mesure (1, 28, 29) selon l'une des revendications précédentes, **caractérisé en ce que** le support (17) comprend une surface d'appui supérieure sur laquelle peut être posée la protection contre les giclées (16).

5. Dispositif de mesure (1, 28, 29) selon l'une des revendications précédentes, **caractérisé en ce que** la protection contre les giclées (16) est visuellement transparente.

6. Dispositif de mesure (1, 28, 29) selon la revendication 5, **caractérisé en ce que** la protection contre les giclées (16) est fabriquée au moins en partie en verre borosilicate.

7. Dispositif de mesure (1, 28, 29) selon l'une des revendications 1 à 4, **caractérisé en ce que** la protection contre les giclées (16) est un filtre optique qui est au moins imperméable à la lumière dans la gamme des rouges.

8. Dispositif de mesure (1, 28, 29) selon l'une des revendications précédentes, **caractérisé en ce que** la protection contre les giclées (16) est une petite plaque.

9. Dispositif de mesure (1, 28, 29) selon l'une des revendications précédentes, **caractérisé en ce que** l'injecteur (2) comprend une conduite d'alimentation (4), qui est disposée à distance de l'optique (10, 10', 10") et de son axe optique (20, 31, 32), et **en ce que** l'aiguille d'injecteur (6) est raccordée à la conduite d'alimentation (4) avec une extrémité opposée à l'extrémité de sortie (25).

10. Dispositif de mesure (1, 28, 29) selon l'une des revendications précédentes, **caractérisé en ce qu'**il comprend un deuxième injecteur (3) pour délivrer un réactif dans un puits (9) de la microplaque (8), le deuxième injecteur (3) comprenant une aiguille d'injecteur (7) dotée d'une extrémité de sortie (26), et **en ce que** l'extrémité de sortie (26) du deuxième injecteur (3) est agencée à distance par rapport à l'extrémité de sortie (25) du premier injecteur (2).

11. Dispositif de mesure (1, 28, 29) selon la revendication 10, **caractérisé en ce que** l'extrémité de sortie (26) du deuxième injecteur (3) est espacée de l'extrémité de sortie (25) du premier injecteur (2) d'une distance qui correspond sensiblement à un entraxe ou à un multiple d'un entraxe du puits (9) de la microplaque (8).

12. Dispositif de mesure (1, 28, 29) selon la revendication 10 ou 11, **caractérisé en ce que** le premier injecteur (2) et le deuxième injecteur (3) sont entourés d'un boîtier (19), et **en ce qu'**un support (17) pour la protection contre les giclées (16) est fixé sur le boîtier (19).

13. Dispositif de mesure (1, 28, 29) selon l'une des revendications précédentes, **caractérisé en ce que** l'optique (10, 10', 10") est réalisée coulissante horizontalement.

14. Dispositif de mesure (1, 28, 29) selon la revendication 13, **caractérisé en ce qu'**il comprend, pour déplacer l'optique (10, 10', 10"), un entraînement composé d'une tige d'entraînement (14) et d'un moteur d'entraînement (15).

15. Dispositif de mesure (1, 28, 29) selon la revendication 13 ou 14, **caractérisé en ce qu'**il comprend une zone d'entretien (24), dans laquelle l'optique (10, 10', 10") peut être coulissée dans une position d'entretien, de façon à pouvoir accéder à la protection contre les giclées (16) et son support (17).

16. Lecteur de microplaques (27) pour mesurer des signaux lumineux émis par des échantillons dans des puits (9) d'une microplaque (8), le lecteur de microplaques (27) comprenant :
- un dispositif de mesure de luminescence (1) selon l'une des revendications 2 à 15,
- au moins un dispositif de mesure (28, 29) choisi parmi un groupe comprenant :
• un dispositif de mesure (28) pour mesurer un signal de fluorescence d'échantillons dans des puits (9) d'une microplaque (8) qui comprend un détecteur (12') pour la lumière fluorescente, et
• un dispositif de mesure (29) pour mesurer l'absorption d'échantillons dans des puits (9) de la microplaque (8), qui comprend un détecteur (12") pour les mesures d'absorption ; et
• un chariot (18) destiné à recevoir la microplaque (8) et à positionner la microplaque en question (8) par rapport au/aux dispositif(s) de mesure (1, 28, 29).

17. Procédé pour mesurer un signal lumineux d'un échantillon dans un puits (9) d'une microplaque (8) comprenant les étapes suivantes consistant à :
- fournir un dispositif de mesure (1) comprenant :
• un premier injecteur (2) pour délivrer un réactif dans un puits (9) d'une microplaque (8), l'injecteur (2) comprenant une aiguille d'injecteur (6) dotée d'une extrémité de sortie (25),
• une optique (10, 10', 10") avec un axe optique (20, 31, 32) s'étendant sensiblement perpendiculairement à la microplaque (8) et une zone de mesure (23) entourant l'axe optique (20, 31, 32) pour mesurer un signal lumineux d'un échantillon dans un puits (9) de la microplaque (8), l'aiguille d'injecteur (6) de l'injecteur (2) s'étendant jusque sous l'optique (10, 10', 10") et débouchant, avec son extrémité de sortie (25), dans la zone de mesure (23) de l'optique (10, 10', 10"), et
• une protection contre les giclées (16) qui est agencée au-dessus de l'extrémité de sortie (25) de l'injecteur (2) et sous l'optique (10, 10', 10") et qui s'étend sensiblement perpendiculairement à l'axe optique (20) et recouvre complètement au moins la zone de mesure (23) de l'optique (10, 10', 10"), un support (17) soutenant la protection contre les giclées (16) étant fixé sur l'injecteur (2),
- délivrer un réactif dans un puits (9) de la microplaque (8) à l'aide de l'injecteur (2),
- mesurer un signal lumineux de l'échantillon dans un puits (9) de la microplaque (8) le long de l'axe optique (20, 31, 32) ainsi que dans la zone de mesure (23) de l'optique (10, 10', 10"),
la délivrance du réactif et la mesure du signal lumineux de l'échantillon intervenant dans le même puits (9).

18. Procédé pour mesurer un signal lumineux d'un échantillon dans un puits (9) d'une microplaque (8), comprenant les étapes suivantes consistant à :
- fournir un dispositif de mesure (1) comprenant :
• un premier injecteur (2) pour délivrer un réactif dans un puits (9) d'une microplaque (8), le premier injecteur (2) comprenant une aiguille d'injecteur (6) dotée d'une extrémité de sortie (25),
• une optique (10, 10', 10") avec un axe optique (31) s'étendant sensiblement perpendiculairement à la microplaque (8) et une zone de mesure (23) entourant l'axe optique (31) pour mesurer un signal lumineux d'un échantillon dans un puits (9) de la microplaque (8), l'aiguille d'injecteur (6) du premier injecteur (2) s'étendant jusque sous l'optique (10, 10', 10") et débouchant, avec son extrémité de sortie (25), dans la zone de mesure (23) de l'optique (10, 10', 10"),
• une protection contre les giclées (16) agencée au-dessus de l'extrémité de sortie (25) de l'injecteur (2) et sous l'optique (10, 10', 10") et qui s'étend sensiblement perpendiculairement à l'axe optique (31) et recouvre complètement au moins la zone de mesure (23) de l'optique (10, 10', 10"), un support (17) soutenant la protection contre les giclées (16) étant fixé sur l'injecteur (2), et
• un deuxième injecteur (3) comprenant une aiguille d'injecteur (7) et une extrémité de sortie (26), l'extrémité de sortie (26) du deuxième injecteur étant espacé de l'extrémité de sortie (25) du premier injecteur (2) d'une distance qui correspond à un entraxe ou à un multiple d'un entraxe du puits de la microplaque (8),
- délivrer un premier réactif dans un puits (9) de la microplaque l'aide du deuxième injecteur (3),
- délivrer un deuxième réactif avec le premier injecteur (2) dans un puits (9),
- mesurer un signal lumineux de l'échantillon dans un puits (9) de la microplaque (8) le long de l'axe optique (20) ainsi que dans la zone de mesure (23) de l'optique (10, 10', 10"),
la délivrance du deuxième réactif et la mesure du signal lumineux de l'échantillon intervenant dans le même puits (9).
